# FASCICULE DE BREVET EUROPEEN

(11) **EP 1 083 378 B1**
(45) Date de publication et mention de la délivrance du brevet: **11.08.2004**
(21) Numéro de dépôt: 00402466.7
(22) Date de dépôt: 07.09.2000
(51) Int. Cl.: F16L 59/14, F23J 13/02

(54) **Elément tubulaire à double paroi et procédé de fabrication d'un tel élément tubulaire**
Doppelwandiger Rohrabschnitt und Verfahren zur Herstellung von rohrförmigen Elementen
Double walled pipe element and a method for manufacturing the tubular element

(30) Priorité: 08.09.1999 FR 9911236
(43) Date de publication de la demande: 14.03.2001
(73) Titulaire: ETABLISSEMENTS POUJOULAT, 79360 Granzay Gript (FR)
(72) Inventeur: Murzeau, Jack, 79000 Niort (FR); Coirier, Yves, 92380 Garches (FR)
(74) Mandataire: Michelet, Alain

(56) Documents cités:
- EP-A- 0 100 692
- GB-A- 1 363 683
- GB-A- 1 419 810
- GB-A- 2 052 715
- US-A- 4 846 147

## Description

L'invention concerne un élément tubulaire à double paroi pour un conduit de gaz chauds, un procédé de fabrication d'un tel élément tubulaire et un conduit de gaz chauds obtenu par emmanchement d'au moins deux de ces éléments tubulaires.

Habituellement, les gaz chauds, comme par exemple la fumée provenant d'une chaudière, circulent dans des conduits obtenus par simple emmanchement de deux ou plusieurs éléments tubulaires en aluminium ou en acier. Chacun de ces éléments tubulaires comprend une paroi intérieure et une paroi extérieure qui définissent entre elles un espace intermédiaire rempli, pour le moins sur une partie de leur longueur axiale, d'un matériau thermiquement isolant.

Le document FR-A-2.566.095 décrit un conduit métallique à double paroi pour gaz très chauds. L'espace entre les deux parois et leur solidarisation sont obtenus par l'intermédiaire de bagues isolantes rigides qui emprisonnent un matériau isolant. L'étanchéité à l'emboîtement de deux éléments tubulaires est obtenue par l'intermédiaire d'une bague en matière ignifuge souple retenue par un jonc élastique amovible. Afin de rendre possible l'emboîtement des éléments tubulaires, chacun d'entre eux est conique.

La réalisation d'éléments tubulaires ayant une forme conique ou ayant, pour le moins, des extrémités coniques, implique souvent une étape supplémentaire dans la fabrication. Indépendamment de cela, la différence de température entre le conduit froid et le conduit chauffé par les gaz chauds est si grande, que la dilatation longitudinale, ou axiale, résultante des parois entraîne un blocage des extrémités coniques entre elles. Pour remédier à cela, on prévoit, d'habitude, un écartement suffisamment grand entre les éléments tubulaires froids et la mise en place d'un joint d'étanchéité approprié.

Le but de l'invention est de remédier aux inconvénients précités et de proposer un élément tubulaire qui permet de renoncer à des formes coniques et qui, de préférence, est simple à réaliser.

Le but de l'invention est atteint par un élément tubulaire à double paroi avec au moins deux raccords dont un raccord mâle et un raccord femelle, pour un conduit de gaz chauds, les deux parois intérieure et extérieure étant formées chacune par une feuille métallique roulée autour d'un axe longitudinal et soudée, et limitées à chacun des raccords par un bord annulaire et délimitant entre elles un espace intermédiaire rempli au moins partiellement d'un premier matériau thermiquement isolant, caractérisé en ce que le raccord femelle comprend un évasement cylindrique de la paroi intérieure et en ce que le raccord mâle comprend un évasement cylindrique de la paroi extérieure, ladite paroi intérieure au raccord mâle dépassant, en longueur axiale, la paroi extérieure au raccord mâle, et les évasements cylindriques permettant un emboîtement des parois correspondantes d'un élément tubulaire adjacent.

Conformément à l'invention, le raccord femelle comprend un évasement cylindrique de la paroi intérieure et le raccord mâle comprend un évasement cylindrique de la paroi extérieure.

L'invention concerne également les caractéristiques ci-après considérées isolément ou selon toutes leurs combinaisons techniquement possibles:
- le premier matériau thermiquement isolant est retenu entre les parois par des rondelles consistant en un second matériau thermiquement isolant, plus compact que le premier, et disposées une à une à chaque raccord, la rondelle disposée au raccord femelle étant supportée par des moyens de retenue fixés par point à une des deux parois,
- les parois sont pourvues, à chacun des raccords d'une moulure disposée à une distance axiale du bord annulaire correspondant,
- l'élément tubulaire comprend une première partie de parois coaxiales par rapport à un premier axe et une seconde partie de parois coaxiales par rapport à un second axe, les deux axes formant un angle et l'élément tubulaire ayant deux ou trois raccords en fonction du positionnement de la seconde partie des parois à une extrémité de la première partie de parois ou entre ses deux extrémités,
- l'angle entre les deux axes est de l'ordre de 90°,
- l'élément tubulaire est coudé,
- l'élément tubulaire est un élément en T.

Le but de l'invention est également atteint par un procédé de fabrication d'un élément tubulaire a double paroi décrit plus haut avec au moins deux raccords, dont un raccord mâle et un raccord femelle, une première partie des parois étant coaxiales par rapport à un premier axe et une seconde partie des parois étant coaxiales par rapport à un second axe, les deux axes formant un angle.

Conformément à l'invention, le procédé comprend les étapes:
- introduire la paroi intérieure de la première partie de parois axialement à l'intérieur de la paroi extérieure de la première partie de parois,
- faire ressortir la paroi intérieure de la paroi extérieure jusqu'à pouvoir souder la paroi intérieure de la seconde partie de parois sur la paroi intérieure de la première partie de parois,
- effectuer ce soudage
- et souder ensuite la paroi extérieure de la seconde partie de parois sur la paroi extérieure de la première partie de parois.

Lorsque l'élément tubulaire est coudé, les première et seconde parties de parois sont disposées de façon que leurs axes forment un angle, par exemple, de 30° ou de 90°. Pour pouvoir souder les parois correspondantes l'une sur l'autre, il est alors suffisant de découper les extrémités à souder sous un angle approprié pour obtenir le coude souhaité.

Cependant, lorsque l'élément tubulaire a la forme d'un T, il convient de pourvoir la paroi intérieure de celle des deux parties de l'élément tubulaire qui doit recevoir l'autre partie, d'un support de piquage et la paroi extérieure de la partie recevant l'autre partie, d'une ouverture latérale ou éventuellement aussi d'un support de piquage.

Dans ce cas, la deuxième étape du procédé de fabrication est mise en oeuvre en faisant ressortir le support de piquage par l'ouverture latérale jusqu'à pouvoir souder la paroi intérieure de la seconde partie de parois sur le support de piquage, et la quatrième étape est mise en oeuvre en soudant la paroi extérieure de la seconde partie de parois sur l'ouverture latérale - ou, le cas échéant, sur l'autre support de piquage - de la paroi extérieure de la première partie de parois.

Selon un mode de mise en oeuvre avantageux du procédé de l'invention, on place, dans un espace intermédiaire délimité entre les parois intérieure et extérieure de l'élément tubulaire, à chacun des raccords sauf à un, une rondelle consistant en un matériau compact et thermiquement isolant, on injecte dans l'espace intermédiaire, à l'aide d'air comprimé, un matériau meuble et thermiquement isolant et l'on ferme l'espace au raccord correspondant par insertion d'une rondelle consistant en un matériau compact et thermiquement isolant.

Le but de l'invention est enfin atteint par un conduit de gaz chauds, obtenu par emmanchement d'au moins un premier élément tubulaire dans un deuxième élément tubulaire, comme décrit dans la revendication 11.

Conformément à l'invention, chacun des éléments tubulaires est conforme à l'élément tubulaire décrit plus haut.

Divers avantages et caractéristiques de l'invention ressortiront de la description d'un exemple de réalisation de l'élément tubulaire selon l'invention et de la description d'un exemple de mise en oeuvre du procédé de fabrication d'un élément tubulaire, en se référant aux dessins. Dans ces dessins:
La Figure 1 montre un élément tubulaire à double paroi selon l'invention.
La Figure 2 montre un conduit constitué de deux éléments tubulaires selon l'invention.
La Figure 3 montre un élément tubulaire coudé.
La Figure 4 montre un élément tubulaire en T.
Les Figures 5A à 5D montrent les étapes du procédé de fabrication de l'élément tubulaire selon l'invention pour la réalisation d'un élément tubulaire en T.

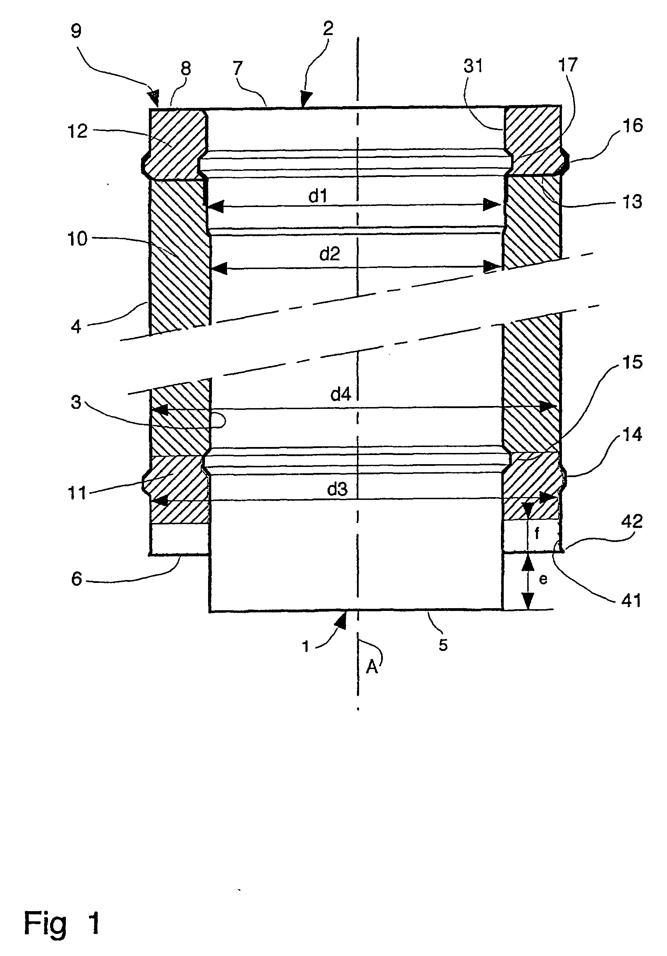

L'élément tubulaire (100), représenté sur la Figure 1, est un élément tubulaire à double paroi avec deux raccords constitués par une extrémité mâle 1 et une extrémité femelle 2. La double paroi est constituée par une paroi intérieure 3 et une paroi extérieure 4 limitée à chacun des raccords par un bord annulaire référencé respectivement 5, 6, 7 et 8. Les parois intérieure et extérieure ont chacune une forme essentiellement cylindrique droit, à section circulaire autour d'un axe de symétrie A, et sont réalisées, par exemple en acier inoxydable.

Les parois intérieure 3 et extérieure 4 délimitent entre elles un espace intermédiaire 9. Cet espace intermédiaire 9 est rempli, sur la plus grande partie de la longueur axiale de l'élément tubulaire 100, d'un premier matériau thermiquement isolant 10 maintenu en place par deux rondelles 11, 12 appelées aussi « bouchons » et consistant en un second matériau thermiquement isolant différent du premier.

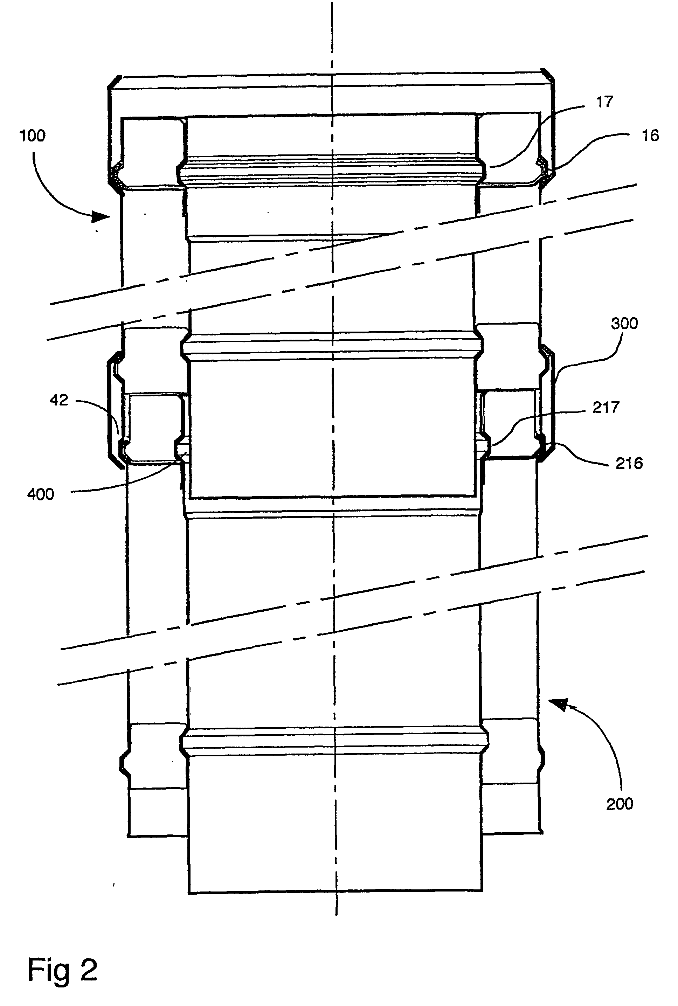

Pour faciliter l'emboîtement d'un raccord 1 d'un premier élément tubulaire dans un raccord 2 d'un deuxième élément tubulaire, comme cela est représenté sur la Figure 2, le bouchon 11 est disposé de façon à ce que sa surface extérieure opposée à celle qui est en contact avec le matériau isolant 10, soit en retrait par rapport au bord 6 de la paroi extérieure 4. De plus, le bord 6 est pourvu d'un évasement supplémentaire 42 qui s'étend à partir du bord 6 sur une faible longueur axiale et qui peut être obtenu par emboutissage ou par enroulage pour lui donner, lorsque la paroi extérieure 4 est constituée, une forme conique. L'évasement conique supplémentaire 42 est destiné à faciliter l'introduction de la paroi extérieure d'un premier élément tubulaire dans la paroi extérieure correspondante d'un deuxième élément tubulaire.

Afin de pouvoir obtenir un conduit par emboîtement de l'élément tubulaire 100 avec un élément tubulaire semblable 200, tel que cela est représenté sur la Figure 2, la paroi intérieure 3 est pourvue, du côté du raccord femelle 2, d'un évasement cylindrique droit 31 et la paroi extérieure 4 est pourvue, du côté du raccord mâle 1, d'un évasement cylindrique droit 41.

Les évasements 31 et 41 se distinguent des sections restantes de la paroi correspondante 3 ou 4 par le fait que leur diamètre est légèrement plus grand. En ce qui concerne l'évasement 31 de la paroi intérieure 3, la différence entre le diamètre d₁ de l'évasement 31 et le diamètre d₂ de la partie restante de la paroi intérieure 3 est de l'ordre de 2 à 3 mm pour une épaisseur de la paroi de 10 dixièmes de mm. Et la différence entre le diamètre d₃ de l'évasement 41 et le diamètre d₄ de la paroi extérieure 4 est de l'ordre de 2 mm pour une épaisseur d'acier de 10 dixièmes de mm.

Avantageusement, mais non nécessairement, on choisit l'évasement 31 légèrement plus grand que l'évasement 41 pour tenir compte de la dilatation plus grande de la paroi intérieure 3 par rapport à celle de la paroi extérieure 4.

Par ailleurs, la paroi intérieure 3 dépasse la paroi extérieure 4, en longueur axiale, du côté du raccord mâle 1, d'une longueur e afin d'obtenir un raccordement sur et étanche après emboîtement des éléments tubulaires l'un dans l'autre.

La liaison entre la paroi intérieure 3 et la paroi extérieure 4 est assurée par des moyens de retenue 13 ayant la forme de pattes clip. En général, deux ou trois pattes clip sont suffisantes. Ces pattes clip sont réparties sur la circonférence de la paroi intérieure 3 et sont fixées sur cette dernière par un soudage par point, à l'une de leurs extrémités. L'autre extrémité de chacune des pattes clip est introduite dans une moulure correspondante de deux moulures 14, 16 dont est pourvue la paroi extérieure 4. Les pattes clip 13 ont de faibles dimensions pour éviter un pont thermique entre les parois intérieure et extérieure. De plus, elles n'ont pas besoin d'être très fortes puisqu'elles partagent le rôle de maintien entre les parois intérieure 3 et extérieure 4 avec les bouchons 11 et 12 formés de façon à rentrer par leur circonférence extérieure dans les moulures 14, 16 et, par leur circonférence intérieure, dans des moulures 15, 17 dont est pourvue la paroi intérieure 3. Ainsi, les parois intérieure 3 et extérieure 4 sont maintenues en position coaxiale par les rondelles, ou bouchons, 11 et 12 fermement enfermés entre les parois 3 et 4 et ayant engrenage avec les moulures 14 à 17 comme cela est représenté sur la Figure 1. D'autre part, les parois sont maintenues en position longitudinale relative le long de l'axe de symétrie A, par les pattes clip 13 fixées sur la paroi intérieure 3 par soudage et par clipsage dans la moulure correspondante 16 à l'autre extrémité.

En dehors de cet effet mécanique de maintien en position relative des deux parois intérieure 3 et extérieure 4, les moulures, et notamment la moulure 17 de la paroi intérieure 3 du côté du raccord 2, constituent une barrière de capillarité permettant de bloquer des remontées éventuelles d'humidité à l'intérieur de l'espace 9 destiné au matériau d'isolation.

La moulure 17 peut par ailleurs recevoir un joint élastomère 400. Cela est représenté sur la Figure 2 par le joint élastomère 400 introduit dans une moulure 217 de l'élément tubulaire 200, qui correspond à la moulure 17 de l'élément tubulaire 100.

Le grand avantage de la conception de l'élément tubulaire selon l'invention consiste en l'identité entre les formes des moulures 14 à 17, d'une part, et des formes des évasements 31 et 41 d'autre part. Cette identité des formes des moulures permet de les obtenir par un seul outil. De manière analogue, l'identité entre les formes des évasements permet de les obtenir également par un même outil. Ainsi, la différence de diamètre entre les deux évasements est obtenue par une découpe en une dimension différente selon les circonférences respectives de la paroi intérieure 3 et de la paroi extérieure 4.

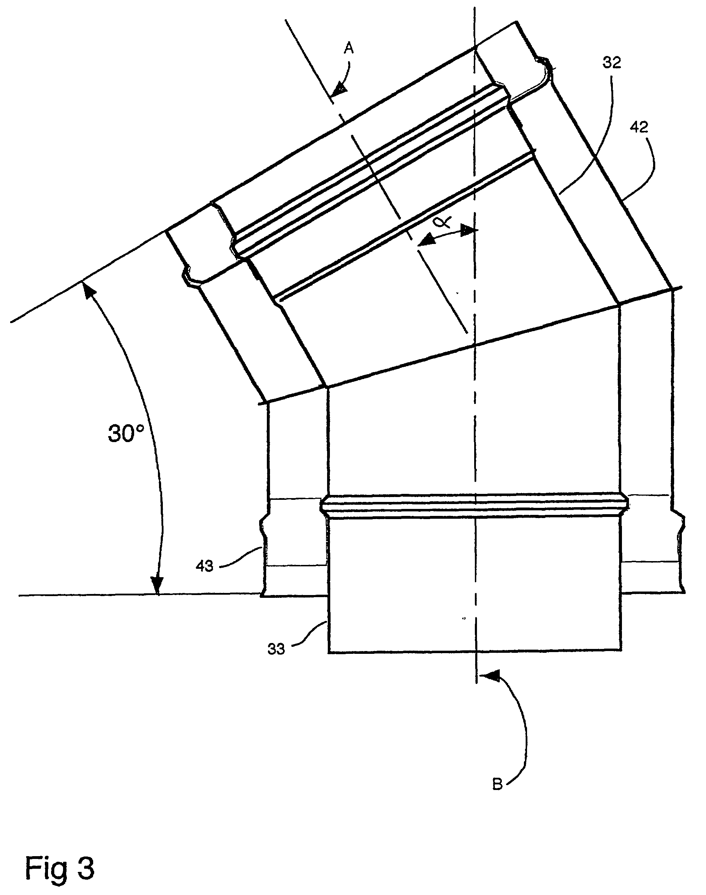

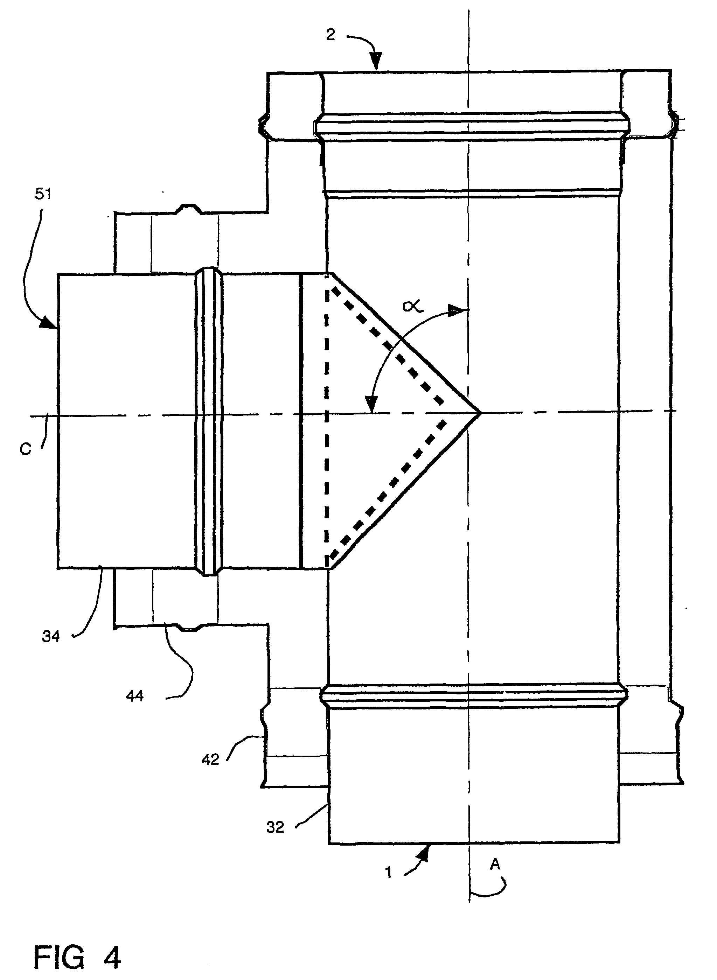

Alors que les Figures 1 et 2 représentent un élément tubulaire, ou deux éléments tubulaires droits, ayant chacun deux raccords, les Figures 3 et 4 représentent des éléments tubulaires comprenant une première partie 32, 42 de parois coaxiales par rapport un premier axe A et une seconde partie 33, 43 ou 34, 44 de parois coaxiales par rapport à un second axe référencé respectivement en C. Ainsi, l'élément tubulaire représenté sur la Figure 3 est un élément tubulaire coudé dont les deux parties de parois sont coaxiales par rapport à des axes A et B formant entre eux un angle α dont la valeur est de l'ordre de 30°.

De manière analogue, les éléments tubulaires représentés sur la Figure 4 comprennent deux parties de paroi dont les axes de symétrie A et C forment un angle a dont la valeur est de 90°. Plus particulièrement, l'élément tubulaire représenté sur la Figure 4 est un élément en T du fait que la seconde partie des parois coaxiales est disposée entre les deux extrémités 1 et 2 de la première partie de parois coaxiales. Cet élément tubulaire a trois raccords référencés respectivement 1, 2 et 51.

En variante, la seconde partie de parois coaxiales pourrait être disposée à l'une ou l'autre des extrémités correspondant aux raccords 1 et 2 de la première partie de la paroi coaxiale de manière à former un élément tubulaire en coude en L.

En ce qui concerne la fabrication d'un élément tubulaire selon l'invention, les étapes nécessaires à la fabrication de l'un ou de l'autre des différents types d'éléments tubulaires indiqués plus haut, peuvent être regroupées essentiellement en deux groupes. Le premier groupe consiste en les étapes de préparation de feuilles métalliques destinées à constituer les parois coaxiales ou respectivement la première ou la seconde partie de ces parois coaxiales de la double paroi de l'élément tubulaire de l'invention. Le second groupe consiste en l'assemblage des éléments tubulaires à partir de deux parois obtenues par un soudage longitudinal des feuilles roulées autour d'un axe longitudinal pour obtenir soit un élément tubulaire droit ou un élément tubulaire coudé ou encore un élément tubulaire en T.

Dans le cadre du premier groupe des étapes de fabrication d'un élément tubulaire à double paroi selon l'invention, on découpe d'abord des feuilles métalliques avantageusement en acier inoxydable, selon les dimensions de chacune des parois intérieure et extérieure de l'élément tubulaire. L'élément tubulaire a habituellement un diamètre intérieur compris entre 125 mm et 600 mm et un diamètre extérieur qui est supérieur au diamètre intérieur par environ 50 mm, en fonction de l'épaisseur d'un matériau thermiquement isolant prévu. La longueur d'un élément tubulaire droit est située entre environ 100 mm et 1400 mm. Il en est de même pour la longueur totale des deux parties de paroi d'un élément coudé. En ce qui concerne la longueur de la partie à rapporter d'un élément en T, le troisième raccord et la partie correspondante des parois dépassent la paroi extérieure d'une longueur de l'ordre de 50 à 60 mm.

La découpe d'une feuille métallique pour obtenir une paroi cylindrique étant connue en soi, aucune description détaillée en est donnée.

Après avoir découpé les feuilles, on forme respectivement la paroi intérieure et la paroi extérieure de l'élément tubulaire selon l'invention, chacune des feuilles étant soumise à un roulage effectué sur celui de ses côtés destiné à constituer l'évasement de la paroi extérieure ou de la paroi intérieure comme décrit plus haut.

Ensuite, chacune des feuilles est soumise à un moulurage, avantageusement par roulage par un outil unique, à chacun des deux côtés destinés à constituer les extrémités des parois d'un élément tubulaire droit ou les raccords constitués par l'une ou l'autre des parties d'un élément coudé ou en T. Les moulurages sont effectués à des distances des bords correspondants des feuilles, ces distances étant définies selon l'élément tubulaire à obtenir.

La dernière étape de ce groupe d'étapes consiste alors à rouler les feuilles découpées et moulurées autour de l'axe de l'élément tubulaire droit ou de la partie correspondante de l'élément tubulaire et d'effectuer une soudure en longueur pour obtenir la paroi cylindrique.

Dans le cadre du second groupe d'étapes de fabrication d'un élément tubulaire selon l'invention, on recouvre d'abord les parois intérieures du côté qui est destiné à former un raccord femelle, de deux ou éventuellement 3 pattes clip 13. Ces pattes sont fixées sur la face extérieure de la paroi intérieure par soudage par point. Ainsi, les pattes sont disposées sur la face extérieure de la paroi intérieure et orientées sensiblement radialement par rapport à celle-ci. Ensuite, la paroi intérieure est introduite dans la paroi extérieure jusqu'à ce que les pattes clip 13 s'encliquettent, par leurs extrémités libres formées en courbe, dans la moulure correspondante, référencée en 16, de la paroi extérieure.

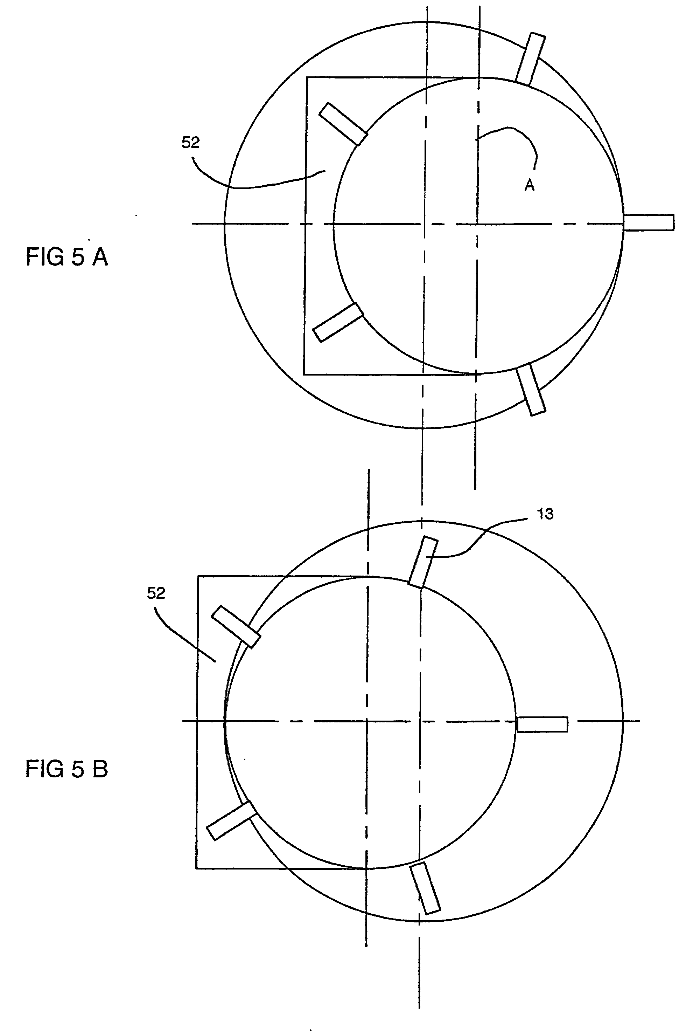

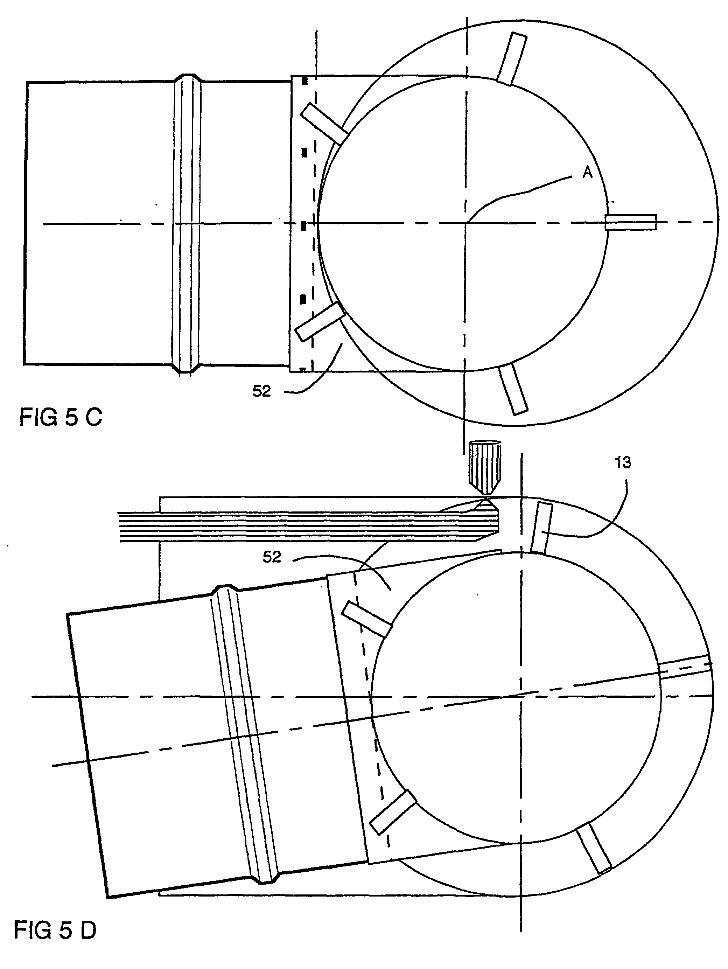

Lorsqu'il s'agit de fabriquer un élément tubulaire en T, la paroi intérieure est pourvue, avant d'être introduite dans la paroi extérieure, d'un support de piquage 52 représenté sur les Figures 5A à 5D. La paroi intérieure y est introduite jusqu'à ce que les pattes clip 13 prennent appui sur la paroi extérieure. Ensuite, le support de piquage 52 est ressorti par une ouverture latérale 62 prévue à cet effet dans la paroi extérieure. Lorsque le support de piquage 52 est mis en position de soudage, la partie correspondante de la paroi intérieure est soudée sur le support de piquage.

Ensuite, le support de piquage est remis en place de manière telle que la paroi intérieure et la paroi extérieure soient coaxiales par rapport à l'axe longitudinal A.

Par la suite, la partie correspondante de la paroi extérieure, destinée à constituer le troisième raccord, est appliquée sur la paroi extérieure de la première partie des parois coaxiales et y est soudée. Lors du soudage, la paroi intérieure est déplacée axialement et/ou angulairement selon un angle β indiqué sur la Figure 5D, autour de l'axe A de l'élément tubulaire. Les déplacements axial et angulaire de la paroi intérieure par rapport à la paroi extérieure sont effectués en fonction de l'avancement de l'outil de soudage destiné à effectuer le soudage par point des parois.

Lors de la formation d'un conduit par emboîtement de l'élément tubulaire de l'invention, les moulures 14 et 16 de la paroi extérieure de chacun des éléments tubulaires emboîtés contribuent de deux façons à la fixation des éléments tubulaires entre eux. Premièrement, l'évasement supplémentaire 42 du premier élément tubulaire 100 prend appui sur une face en regard d'une moulure 216 de l'élément tubulaire 200. La moulure 216 correspond à la moulure 16 de l'élément tubulaire 100.

Par ailleurs, les moulures 14 et 16 aident à l'emboîtement par le fait qu'elles prêtent leurs flancs à un collier 300 constitué par une attache annulaire à fermeture rapide. Ce collier 300 a une section transversale en forme générale d'un « C » et permet à la fois un assemblage rigide des deux éléments tubulaires 100 et 200, après emboîtement, et le bénéfice de l'élasticité du collier pour maintenir les deux éléments tubulaires ensemble, même sous l'influence de contraintes mécaniques.

Le joint en élastomère peut être remplacé par un joint en céramique tressée.

## Revendications

1. Elément tubulaire à double paroi avec au moins deux raccords (1, 2) dont un raccord mâle (1) et un raccord femelle (2), pour un conduit de gaz chauds, les deux parois intérieure (3) et extérieure (4) étant formées chacune par une feuille métallique roulée autour d'un axe longitudinal et soudée, et limitées à chacun des raccords par un bord annulaire (5-8) et délimitant entre elles un espace intermédiaire (9) rempli au moins partiellement d'un premier matériau thermiquement isolant (10), **caractérisé en ce que** le raccord femelle (2) comprend un évasement cylindrique (31) de la paroi intérieure (3) et **en ce que** le raccord mâle (1) comprend un évasement cylindrique (41) de la paroi extérieure (4), ladite paroi intérieure (3) au raccord mâle (1) dépassant, en longueur axiale, la paroi extérieure (4) au raccord mâle (1), et les évasements cylindriques (31, 41) permettant un emboîtement des parois correspondantes d'un élément tubulaire adjacent.

2. Elément tubulaire selon la revendication 1, **caractérisé en ce que** le premier matériau thermiquement isolant (10) est retenu entre les parois (3, 4) par des rondelles (11, 12) consistant en un second matériau thermiquement isolant, plus compact que le premier, et disposées une à une à chaque raccord (1, 2), la rondelle (12) disposée au raccord femelle (2) étant supportée par des moyens de retenue (13) fixés par point à une (3) des deux parois (3, 4).

3. Elément tubulaire selon la revendication 1 ou 2, **caractérisé en ce que** les parois (3, 4) sont pourvues, à chacun des raccords (1, 2) d'une moulure (14-17) disposée à une distance axiale du bord annulaire (5-8) correspondant et dirigée vers l'extérieur.

4. Elément tubulaire selon l'une quelconque des revendications 1 à 3, **caractérisé en ce qu'**il comprend une première partie (32, 42) de parois coaxiales par rapport à un premier axe (A) et une seconde partie (33,43; 34,44) de parois coaxiales par rapport à un second axe (B; C), les deux axes formant un angle (α) et l'élément tubulaire ayant deux ou trois raccords (12, 51) en fonction du positionnement de la seconde partie des parois (33;43, 34,44) à une extrémité de la première partie de parois (32, 42) ou entre ses deux extrémités.

5. Elément tubulaire selon la revendication 4, **caractérisé en ce que** l'angle entre les deux axes est de l'ordre de 90°.

6. Elément tubulaire selon la revendication 4 ou 5, **caractérisé en ce qu'**il est coudé.

7. Elément tubulaire selon la revendication 4 ou 5, **caractérisé en ce qu'**il est un élément en T.

8. Procédé de fabrication d'un élément tubulaire à double paroi selon l'une quelconque des revendications 1 à 7, avec au moins deux raccords, dont un raccord mâle (1) et un raccord femelle (1), une première partie (32, 42) des parois étant coaxiales par rapport à un premier axe (A) et une seconde partie (34, 44) des parois étant coaxiales par rapport à un second axe (B; C), les deux axes formant un angle (α), **caractérisé en ce que** le procédé comprend les étapes:
• introduire la paroi intérieure (32) de la première partie de parois (32, 42) axialement à l'intérieur de la paroi extérieure (42) de la première partie de parois (32, 42),
• faire ressortir la paroi intérieure (32) de la paroi extérieure (42) jusqu'à pouvoir souder la paroi intérieure (34) de la seconde partie de parois (34, 44) sur la paroi intérieure (32) de la première partie des parois,
• effectuer ce soudage et
• souder la paroi extérieure (44) de la seconde partie de parois (34, 44) sur celle (42) de la première partie.

9. Procédé de fabrication selon la revendication 8, mis en oeuvre pour obtenir un élément tubulaire à double paroi ayant une forme en T, la paroi intérieure (32) de celle des deux parties de parois destinée à recevoir l'autre partie de parois étant pourvue d'un support de piquage (52) et la paroi extérieure (42) correspondante étant pourvue d'une ouverture latérale, **caractérisé en ce qu'**il comprend les étapes de ressortir le support de piquage (52) par l'ouverture latérale (62) jusqu'à pouvoir souder la paroi intérieure (34) de la seconde partie de parois sur le support de piquage (52) et de souder la paroi exterieure (44) de la seconde partie de parois sur l'ouverture latérale (62) de la paroi extérieure (42) de la première partie de paroi.

10. Procédé de fabrication selon la revendication 8 ou 9, **caractérisé en ce que** l'on place, dans un espace intermédiaire (9) délimité entre les parois intérieure (3, 32, 33) et extérieure (4, 42, 43, 44) de l'élément tubulaire, à chacun des raccords sauf à un, une rondelle (11, 12) consistant en un matériau compact et thermiquement isolant, que l'on injecte dans l'espace intermédiaire (9), à l'aide d'air comprimé, un matériau meuble et thermiquement isolant (10) et que l'on ferme l'espace (9) au raccord correspondant par insertion d'une rondelle (11, 12) consistant en un matériau compact et thermiquement isolant.

11. Conduit de gaz chauds, obtenu par emmanchement d'au moins un premier élément tubulaire (100) dans un deuxième élément tubulaire (200), les éléments tubulaires (100, 200) étant des éléments tubulaires conformes à l'une quelconque des revendications 1 à 7.

## Patentansprüche

1. Doppelwandiger Rohrabschnitt mit mindestens zwei Anschlüssen (1, 2), einem männlichen Anschluss (1) und einem weiblichen Anschluss (2), für eine Heißgasleitung, wobei die innere (3) und die äußere Wand (4) jeweils von einer metallischen Folie gebildet sind, die um eine Längsachse gewickelt und verschweißt ist, und an jedem der Anschlüsse durch einen ringförmigen Rand (5-8) begrenzt sind und zwischen sich einen Zwischenraum (9) begrenzen, der zumindest teilweise mit einem ersten wärmeisolierenden Material (10) gefüllt ist,
**dadurch gekennzeichnet, dass**
der weibliche Anschluss (2) eine zylindrische Erweiterung (31) der Innenwand (3) umfasst, und dass der männliche Anschluss (1) eine zylindrische Erweiterung (41) der Außenwand (4) umfasst, wobei die Innenwand (3) am männlichen Anschluss (1) in der Axiallänge über die Außenwand (4) am männlichen Anschluss (1) hinausragt und die zylindrischen Erweiterungen (31, 41) ein Ineinanderschieben der entsprechenden Wände eines angrenzenden Rohrabschnitts ermöglichen.

2. Rohrabschnitt nach Anspruch 1, **dadurch gekennzeichnet, dass** das erste wärmeisolierende Material (10) zwischen den Wänden (3, 4) durch Scheiben (11, 12) gehalten wird, die in einem zweiten wärmeisolierenden Material bestehen, das kompakter als das erste ist, und die jeweils an jedem Anschluss (1, 2) angeordnet sind, wobei die am weiblichen Anschluss (2) angeordnete Scheibe (12) von Haltemitteln (13) getragen wird, die punktartig an einer (3) der beiden Wände (3, 4) befestigt sind.

3. Rohrabschnitt nach Anspruch 1 oder 2, **dadurch gekennzeichnet, dass** die Wände (3, 4) an jedem der Anschlüsse (1, 2) mit einem Steg ( 14-17) versehen sind, der in einem Axialabstand zum entsprechenden ringförmigen Rand (5-8) angeordnet und nach außen gerichtet ist.

4. Rohrabschnitt nach einem der Ansprüche 1 bis 3, **dadurch gekennzeichnet, dass** er einen ersten Teil (32, 42) von in Bezug auf eine erste Achse (A) koaxialen Wänden und einen zweiten Teil (33, 43; 34, 44) von in Bezug auf eine zweite Achse (B; C) koaxialen Wänden umfasst, wobei die beiden Achsen einen Winkel (a) bilden und der Rohrabschnitt zwei oder drei Anschlüsse (12, 51) in Abhängigkeit von der Positionierung des zweiten Teils der Wände (33; 43, 34, 44) an einem Ende des ersten Teils von Wänden (32, 42) oder zwischen seinen beiden Enden aufweist.

5. Rohrabschnitt nach Anspruch 4, **dadurch gekennzeichnet, dass** der Winkel zwischen den beiden Achsen ungefähr 90° beträgt.

6. Rohrabschnitt nach Anspruch 4 oder 5, **dadurch gekennzeichnet, dass** der geknickt ist.

7. Rohrabschnitt nach Anspruch 4 oder 5, **dadurch gekennzeichnet, dass** er ein T-Element ist.

8. Verfahren zur Herstellung eines doppelwandigen Rohrabschnitts nach einem der Ansprüche 1 bis 7 mit mindestens zwei Anschlüssen, einem männlichen Anschluss (1) und einem weiblichen Anschluss (2), wobei ein erster Teil (32, 42) der Wände zu einer ersten Achse (A) koaxial ist und ein zweiter Teil (34, 44) der Wände zu einer zweiten Achse (B; C) koaxial ist, wobei die beiden Achsen einen Winkel (a) bilden, **dadurch gekennzeichnet, dass** das Verfahren die folgenden Schritte umfasst:
- Einführen der Innenwand (32) des ersten Wandteils (32, 42) axial in das Innere der Außenwand (42) des ersten Wandteils (32, 42),
- Durchstecken der Innenwand (32) durch die Außenwand (42), bis die Innenwand (34) des zweiten Wandteils (34, 44) auf die Innenwand (32) des ersten Wandteils geschweißt werden kann,
- Durchführen dieser Schweißung und
- Schweißen der Außenwand (44) des zweiten Wandteils (34, 44) auf jene (42) des ersten Teils.

9. Herstellungsverfahren nach Anspruch 8, das eingesetzt wird, um einen doppelwandigen Rohrabschnitt mit T-Form zu erhalten, wobei die Innenwand (32) jenes der beiden Wandteile, der dazu bestimmt ist, den anderen Wandteil aufzunehmen, mit einem Durchsteckträger (52) versehen ist, und wobei die entsprechende Außenwand (42) mit einer seitlichen Öffnung versehen ist, **dadurch gekennzeichnet, dass** es die Schritte des Durchsteckens des Trägers (52) durch die seitliche Öffnung (62), bis die Innenwand (34) des zweiten Wandteils auf den Durchsteckträger (52) geschweißt werden kann, und des Schweißens der Außenwand (44) des zweiten Wandteils auf die seitliche Öffnung (62) der Außenwand (42) des ersten Wandteils umfasst.

10. Herstellungsverfahren nach Anspruch 8 oder 9, **dadurch gekennzeichnet, dass** in einem zwischen der Innenwand (3, 32, 33) und der Außenwand (4, 42, 43, 44) des Rohrabschnitts begrenzten Zwischenraum (9) an jedem der Anschlüsse, mit Ausnahme von einem, eine Scheibe (11, 12) angeordnet wird, die in einem kompakten und wärmeisolierenden Material besteht, dass in den Zwischenraum (9) mit Hilfe von Druckluft ein lockeres und wärmeisolierendes Material (10) eingespritzt wird, und dass der Raum (9) am entsprechenden Anschluss durch Einsetzen einer Scheibe (11, 12), die aus einem kompakten und wärmeisolierenden Material besteht, verschlossen wird.

11. Heißgasleitung, die durch Einsetzen von mindestens einem ersten Rohrabschnitt (100) in einen zweiten Rohrabschnitt (200) erhalten wird, wobei die Rohrabschnitte (100, 200) Rohrabschnitte nach einem der Ansprüche 1 bis 7 sind.

## Claims

1. A double-walled tubular element with at least two connections (1, 2), i.e. a plug connection (1) and a socket connection (2), for hot gas conduit, whereas both inner (3) and outer (4) walls are formed each by a metal sheet rolled around a longitudinal axis and welded, and limited at each of the connections by an annular edge (5-8) and delineating together an intermediate space (9) filled at least partially with a first thermally insulating material (10), **characterised in that** the socket connection (2) comprises a cylindrical bell-mouth (31) of the inner wall (3) and **in that** the plug connection (1) comprises a cylindrical bell-mouth (41) of the outer wall (4), said inner wall (3) of the plug connection (1) extending, in axial length, beyond the outer wall (4) of the plug connection (1), and the cylindrical bell-mouths (31, 41) enabling to imbed the corresponding walls of an adjoining tubular element.

2. A tubular element according to claim 1, **characterised in that** the first thermally insulating material (10) is maintained between the walls (3, 4) by washers (11, 12) consisting of a second thermally insulating material , more compact than the first one, and arranged one by one at each connection (1, 2), the washer (12) arranged at the socket connection (2) being supported by retaining means (13) spot-fastened to one (3) of both walls (3, 4).

3. A tubular element according to claim 1 or 2, **characterised in that** the walls (3, 4) are provided, at each connection (1, 2) with a moulding (14-17) arranged at an axial distance from the corresponding annular edge (5-8) and oriented outwardly.

4. A tubular element according to any one of claims, **characterised in that** it includes a first portion (32, 42) of coaxial walls with respect to a first axis (A) and second portion (33, 43; 34, 44) of coaxial walls with respect to a second axis (B; C), both axes forming an angle (a) and the tubular element having two or three connections (12, 51) relative to the positioning of the second portion of the walls (33, 43; 34, 44) at one end of the first portion of the walls (32, 42) or between both its ends.

5. A tubular element according to claim 4, **characterised in that** the angle between both axes is of the order of 90°.

6. A tubular element according to claim 4 or 5, **characterised in that** it is elbow-shaped.

7. A tubular element according to claim 4 or 5, **characterised in that** it is T-shaped.

8. A manufacturing method of a double-walled tubular element according to any one of claims 1 to 7, with at least two connections, i.e. a plug connection (1) and a socket connection (2), a first portion (32, 42) of the walls being coaxial with respect to a first axis (A) and second portion (34, 44) of the walls being coaxial with respect to a second axis (B; C), both axes forming an angle (α), **characterised in that** the method includes the following steps:
• inserting the inner wall (32) of the first portion of walls (32, 42) axially inside the outer wall (42) of the first portion of walls (32, 42),
• making the lower wall (32) protrude from the outer wall (42) until the inner wall (34) of the second portion of walls (34, 44) may be welded to the inner wall (32) of the first portion of walls,
• performing said welding operation and
• welding the outer wall (44) of the second portion of walls (34, 44) to that (42) of the first portion.

9. A manufacturing method according to claim 8, implemented to obtain a T-shaped double-walled tubular element, whereas the inner wall (32) of one of both portions of walls intended for receiving the other portion of walls is provided with a pricking up support (52) and the corresponding outer wall (42) is provided with a lateral opening, **characterised in that** it includes the steps consisting in withdrawing the pricking up support (52) through the lateral opening (62) until the inner wall (34) of the second portion of walls may be welded to the pricking up support (52) and the outer wall (44) of the second portion of walls may be welded to the lateral opening (62) of the outer wall (42) of the first portion of walls.

10. A manufacturing method according to claim 8 or 9, **characterised in that** a washer (11, 12) consisting of a compact and thermally insulating material is placed in the intermediate space (9) delineated between the inner (3, 32, 33) and outer (4, 42, 43, 44) walls of the tubular element, at each connection except one, **in that** a loose and thermally insulating material (10) is injected into the intermediate space (9) using compressed air and **in that** the space (9) is closed at the corresponding connection by inserting a washer (11, 12) consisting of a compact and thermally insulating material.

11. A hot gas conduit, obtained by shrink-fitting of at least a first tubular element (100) into a second tubular element (200), whereas the tubular elements (100, 200) are tubular elements according to any one of claims 1 to 7.
